# EUROPÄISCHE PATENTSCHRIFT

(11) **EP 2 668 474 B1**
(45) Veröffentlichungstag und Bekanntmachung des Hinweises auf die Patenterteilung: **15.09.2021**
(21) Anmeldenummer: 11804977.4
(22) Anmeldetag: 09.12.2011
(51) Int. Cl.: G01F 23/26

(54) **VORRICHTUNG UND VERFAHREN ZUR KAPAZITIVEN FÜLLSTANDSMESSUNG**
DEVICE AND METHOD FOR CAPACITIVELY MEASURING A FILL LEVEL
DISPOSITIF ET PROCÉDÉ POUR LA MESURE CAPACITIVE D'UN NIVEAU DE REMPLISSAGE

(30) Priorität: 26.01.2011 DE 102011003158
(43) Veröffentlichungstag der Anmeldung: 04.12.2013
(73) Patentinhaber: Endress+Hauser SE+Co. KG, 79689 Maulburg (DE)
(72) Erfinder: BECHTEL, Gerd, 79585 Steinen (DE); WERNET, Armin, 79618 Rheinfelden (DE); UPPENKAMP, Kaj, 79664 Wehr (DE)
(74) Vertreter: Andres, Angelika Maria
(86) Internationale Anmeldenummer: PCT/EP2011/072259
(87) Internationale Veröffentlichungsnummer: WO 2012/100873

(56) Entgegenhaltungen:
- EP-A1- 1 898 188
- WO-A1-2008/101333
- DE-A1- 10 250 523
- DE-A1-102006 060 921
- US-A- 5 088 325

## Beschreibung

Die vorliegende Erfindung betrifft eine Vorrichtung und ein Verfahren zur kapazitiven Bestimmung und/oder Überwachung mindestens des Füllstands eines Mediums in einem Behälter mit einer Sondeneinheit. Neben dem Füllstand sind beispielsweise die elektrische Leitfähigkeit und/oder die Permittivität des Mediums bestimmbar, oder es ist überwachbar, ob sich Ansatz an der Sondeneinheit gebildet hat.

Zur Füllstandsmessung in flüssigen Medien kommen häufig auf dem kapazitiven Messprinzip beruhende Messgeräte zum Einsatz. Derartige Messgeräte umfassen eine Sonde mit einer in der Regel stabförmigen Sensorelektrode und gegebenenfalls einer Guardelektrode zur Verbesserung der Messung bei Ansatzbildung an der Sonde. Der Füllstand des Mediums wird aus der Kapazität des von der Sondenelektrode und der Behälterwandung oder einer zweiten Elektrode gebildeten Kondensators ermittelt, wobei an die Sondenelektrode eine Wechselspannung angelegt wird. Je nach Leitfähigkeit des Mediums bildet hierbei das Medium und/oder eine Sondenisolierung das Dielektrikum des Kondensators. Die Guardelektrode liegt auf dem gleichen Potential wie die Sondenelektrode und umgibt die Sondenelektrode zumindest abschnittsweise koaxial. Eine Sonde mit Guard ist beispielsweise in der DE 3212434 C2, eine Sonde ohne Guard in der WO 2006/034959 A2 beschrieben. Kapazitive Sonden zur kontinuierlichen Füllstandsbestimmung oder zur Grenzstandmessung werden von der Anmelderin in unterschiedlichen Ausgestaltungen und mit verschiedenen Sondenlängen hergestellt und vertrieben.

Bei kapazitiven Sonden stellt sich das Problem, dass die Frequenz der angelegten Wechselspannung auf Grund von Resonanzeffekten umso geringer zu wählen ist, je länger die Sonde ist, eine hohe Messfrequenz jedoch die Ansatzverträglichkeit steigert. Ansatz spielt jedoch bei kurzen und langen Sonden gleichermaßen eine Rolle. Um eine für Sonden beliebiger Länge kompatible Elektronikeinheit bereit zu stellen wird daher meist eine Messfrequenz verwendet, welche für alle Sondenlängen gleichermaßen geeignet ist, dadurch jedoch unterhalb der für kürzere Sonden optimalen Frequenz liegt.

Ein weiteres Problem besteht bei Medien mit Leitfähigkeitswerten, welche in einem Übergangsbereich zwischen einem Permittivitätsabhängigen und einem Permittivitätsunabhängigen Messbereich liegen. Der Füllstand ist in diesem Bereich nicht zuverlässig bestimmbar, sodass diese Medien für die kapazitive Füllstandsmessung ausgeschlossen sind.

Aus der DE 10 2006 060 921 A1 ist eine Vorrichtung zur Bestimmung und/oder Überwachung einer Prozessgröße bekannt geworden, bei welcher eine Frequenz eines Anregesignals variiert werden kann.

Die DE 102 50 523 A1 beschreibt ein Verfahren zur Erfassung der Kapazität bzw. einer Kapazitätsänderung eines kapazitiven Schaltungs- oder Bauelements.

In der WO 2008/101333 wird ein Füllstandssensor offenbart, welcher mittels eines Frequenzdurchlaufs eine Grenzschicht zwischen zwei oder mehr Fluiden bestimmt.

Aus der EP 1 898 188 A1 ist eine Methode zur Bestimmung eines Füllstands bekannt geworden. Zur Bestimmung einer Messfrequenz wird bei verschiedenen Frequenzen die Admittanz bestimmt und mit einer Referenzimpedanz verglichen.

Die US 5 088 325 hingegen offenbart ein System zur Bestimmung eines Füllstands, bei welchem eine Messfrequenz anhand einer Phasenverschiebung bestimmt wird.

Die Aufgabe der Erfindung besteht darin, den Anwendungsbereich der kapazitiven Füllstandsmessung zu erweitern.

Die Aufgabe wird gelöst durch eine Vorrichtung zur kapazitiven Bestimmung und/oder Überwachung mindestens des Füllstands eines Mediums in einem Behälter, mit einer Sondeneinheit mit mindestens einer Sondenelektrode, und mit einer Elektronikeinheit, welche dazu ausgestaltet ist, die Sondenelektrode mit einem elektrischen Sendesignal zu beaufschlagen, und ein elektrisches Antwortsignal von der Sondeneinheit zu empfangen und auszuwerten,
wobei die Elektronikeinheit zur Durchführung eines Frequenz-Suchlaufs und zur Beaufschlagung der Sondenelektrode mit dem Frequenz-Suchlauf ausgebildet ist,
wobei der Frequenz-Suchlauf eine Vielzahl an innerhalb eines vorgebbaren Frequenzbands liegenden, aufeinander folgenden, diskreten Erregerfrequenzen aufweist,
dadurch gekennzeichnet,
dass die Elektronikeinheit derart ausgestaltet ist, dass sie anhand des Frequenz-Suchlaufs aus dem Antwortsignal eine durch aktuelle Anwendungsparameter festgelegte optimale Messfrequenz innerhalb des vorgebbaren Frequenzbandes ermittelt, wobei deren zugehöriges Antwortsignal den Füllstand am genauesten repräsentiert und
wobei es sich bei den aktuellen Anwendungsparametern um Umgebungsparameter, insbesondere den Füllstand, die physikalischen Eigenschaften des Mediums, oder Ansatz an der Sondeneinheit, und um die Ausgestaltung der Sondeneinheit, und um eine Einbaugeometrie handelt,
dass die Elektronikeinheit dazu ausgestaltet ist, für jede Frequenz des Sendesignals aus dem zugehörigen Antwortsignal den Wert mindestens einer von den aktuellen Anwendungsparametern abhängigen und aus dem Antwortsignal direkt bestimmbaren, messbaren, sogenannten Kenngröße des Antwortsignals und/oder mindestens einer aus mindestens einer Kenngröße berechenbaren Folgegröße zu ermitteln und zu speichern,
wobei die Elektronikeinheit als Kenngröße die Phasenverschiebung zwischen dem Sendesignal und dem Antwortsignal und die Admittanz bzw. den Betrag des Antwortsignals ermittelt,
und als aus der Kenngröße berechnete Folgegröße insbesondere die Kapazität und/oder den Füllstand des Mediums ermittelt,
dass die Elektronikeinheit dazu ausgestaltet ist, die Sondenelektrode stets mit aufeinander folgenden Frequenzsuchläufen zu beaufschlagen, und
dass die Elektronikeinheit dazu ausgestaltet ist, aus dem zu der optimalen Messfrequenz gehörigen Antwortsignal den Füllstand zu bestimmen.

Die Aufgabe wird weiterhin gelöst durch ein Verfahren zur kapazitiven Bestimmung und/oder Überwachung mindestens des Füllstands eines Mediums in einem Behälter mit einer Sondeneinheit mit mindestens einer Sondenelektrode, die mit einem elektrischen Sendesignal von einer Elektronikeinheit beaufschlagt wird, wobei von der Elektronikeinheit ein elektrisches Antwortsignal von der Sondeneinheit empfangen und ausgewertet wird,
wobei die Sondenelektrode mittels eines Frequenz-Suchlaufs mit einem elektrischen Sendesignal beaufschlagt wird, welches eine Vielzahl an innerhalb eines vorbestimmbaren Frequenzbandes liegenden, aufeinander folgenden, diskreten Erregerfrequenzen aufweist. Das Verfahren zeichnet sich dadurch aus, dass anhand des Frequenz-Suchlaufs aus dem Antwortsignal eine durch aktuelle Anwendungsparameter festgelegte optimale Messfrequenz innerhalb des vorgebbaren Frequenzbandes ermittelt wird, wobei deren zugehöriges Antwortsignal den Füllstand am genauesten repräsentiert und
wobei es sich bei den aktuellen Anwendungsparametern um Umgebungsparameter, insbesondere den Füllstand, die physikalischen Eigenschaften des Mediums, oder Ansatz an der Sondeneinheit, und um die Ausgestaltung der Sondeneinheit und um eine Einbaugeometrie handelt,
dass für jede Frequenz des Sendesignals aus dem zugehörigen Antwortsignal der Wert mindestens einer von den aktuellen Anwendungsparametern abhängigen und aus dem Antwortsignal direkt bestimmbaren, messbaren, sogenannten Kenngröße des Antwortsignals und/oder mindestens einer aus mindestens einer Kenngröße berechenbaren Folgegröße ermittelt und gespeichert wird,
wobei als Kenngröße die Phasenverschiebung zwischen dem Sendesignal und dem Antwortsignal und die Admittanz bzw. der Betrag des Antwortsignals ermittelt werden/wird,
und wobei als aus der Kenngröße berechnete Folgegröße insbesondere die Kapazität und/oder der Füllstand des Mediums ermittelt werden/wird,
dass die Sondenelektrode stets mit aufeinander folgenden Frequenzsuchläufen beaufschlagt wird,
und dass aus einem zu der optimalen Messfrequenz gehörigen Antwortsignal der Sondenelektrode der Füllstand bestimmt wird.

Der Frequenz-Suchlauf macht auch den ansonsten für die kapazitive Messung ausgeschlossenen Leitfähigkeitsbereich zwischen 1 und 100 µS/cm der Messung zugänglich, indem eine Messfrequenz aufgefunden wird, bei welcher das Antwortsignal eine eindeutige, insbesondere lineare Abhängigkeit vom Füllstand aufzeigt. Auch bei unproblematischen Leitfähigkeitswerten wird die Messperformance gegenüber dem Stand der Technik verbessert, da der Frequenz-Suchlauf die Messung mit der für die jeweilige Anwendung optimalen Messfrequenz ermöglicht. Eine optimale Messfrequenz bedeutet beispielsweise, dass für eine beliebige Sondengeometrie stets die maximal mögliche Ansatzverträglichkeit erreicht wird. Gleichzeitig sind Fehler in der Füllstandsanzeige auf Grund von nicht linearem Verhalten des Antwortsignals bei der optimalen Messfrequenz so gering wie möglich. Aus dem bei der für die aktuelle Anwendung optimalen Messfrequenz aufgenommenen Antwortsignal ist der Füllstand mit einem geringstmöglichen Messfehler bestimmbar.

Durch die variable Messfrequenz ist es für den Anwender nicht mehr erforderlich, in Abhängigkeit der jeweiligen Anwendung vorab zwischen zwei Messfrequenzen und somit zwei entsprechenden Elektronikeinheiten zu wählen, oder zu überprüfen, ob das kapazitive Messprinzip überhaupt anwendbar ist. Der Anbieter muss keinen Kompromiss mehr eingehen zwischen der Bereitstellung eines breitbandig einsetzbaren Messgeräts und bestmöglicher Füllstandsmessung. Die zur Durchführung eines Frequenz-Suchlaufs ausgebildete Elektronikeinheit ist universell für beliebige Anwendungen einsetzbar, da die Messfrequenz an die Anwendungsparameter angepasst wird, auch wenn sich diese Parameter ändern.

Die Sondenelektrode wird mit einem Sendesignal in Form einer Wechselspannung beaufschlagt. Während im Stand der Technik eine bestimmte Frequenz vorgegeben ist, wird erfindungsgemäß die Frequenz des Sendesignals innerhalb eines bestimmten Frequenzbands variiert, indem ein so genannter Frequenz-Suchlauf, auch Frequenzsweep genannt, durchgeführt wird. Mit anderen Worten erfolgt die Anregung mit einer Vielzahl aufeinander folgender Frequenzen. Die Schrittweite der Frequenzen liegt beispielsweise jeweils zwischen 10 kHz und 1 MHz und kann über die Frequenzen des Frequenzbands variieren. Das Frequenzband umfasst vorzugsweise mehrere Größenordnungen. Beispielsweise wird ein Frequenzband von 10 kHz bis 10 MHz durchlaufen. Das Antwortsignal, welches die Elektronikeinheit als Antwort auf die Beaufschlagung der Sondenelektrode mit dem Sendesignal empfängt, ist ein Stromsignal, welches beispielsweise über einen Widerstand in ein entsprechendes Spannungssignal umgewandelt und zur Auswertung digitalisiert wird.

Das Antwortsignal wird unter anderem von der Kapazität des aus Sondenelektrode, Gegenelektrode bzw. Behälter, Medium und gegebenenfalls einer Isolation der Sondenelektrode gebildeten Kondensators beeinflusst. Da die Kapazität von der Füllstandshöhe abhängt, ist aus dem Antwortsignal der Füllstand bestimmbar. Hierbei wird das Antwortsignal zur Auswertung in Bezug auf den Füllstand verwendet, welches bei der optimalen Messfrequenz aufgenommen wurde. Die optimale Messfrequenz wird mittels eines Algorithmus bestimmt. Zur Ermittlung der Kapazität ist ein Auswertealgorithmus in der Elektronikeinheit implementiert, welcher das Antwortsignal bei der optimalen Messfrequenz entsprechend auswertet. Der Auswertealgorithmus für ein bei der optimalen Messfrequenz aufgenommenes Antwortsignal unterscheidet sich hierbei nicht von bekannten Auswertealgorithmen, welche bei der Auswertung von Antwortsignalen, welche bei der Beaufschlagung der Sondenelektrode mit einer festen Frequenz aufgenommen werden, zur Anwendung kommen. Neben dem Algorithmus zur Bestimmung und/oder Überwachung des Füllstands, sowie zum Auffinden der optimalen Messfrequenz, sind vorzugsweise weitere Algorithmen in der Elektronikeinheit implementiert, welche aus dem Antwortsignal auf den Frequenzsweep weitere Informationen ermitteln.

Das Antwortsignal ist charakteristisch für die aktuelle Anwendung, d.h. beispielsweise für die aktuellen Umgebungsparameter wie den Füllstand, die physikalischen Eigenschaften des Mediums, oder Ansatz an der Sondeneinheit, für die Ausgestaltung der Sonde, insbesondere die Sondenlänge. All diese Größen sind unter Anwendungsparameter zu subsumieren, welche die optimale Messfrequenz festlegen. Die optimale Messfrequenz, bei welcher der Füllstand am genauesten bestimmbar ist, ist aus dem Antwortsignal bzw. mittels aus dem Antwortsignal gewonnenen charakteristischen Größen ermittelbar.

Erfindungsgemäß wird die Sondenelektrode stets mit aufeinander folgenden FrequenzSuchläufen beaufschlagt und der Füllstand an Hand des optimalen Messpunkts des jeweiligen Frequenz-Suchlaufs bestimmt und/oder überwacht. Die Verwendung aufeinander folgender Frequenz-Suchläufe bietet den Vorteil, dass der Messpunkt bei einer Änderung eines Anwendungsparameters sofort an die neuen Bedingungen angepasst ist. Ein dauerhafter Betrieb des Messgeräts im Frequenz-Suchlauf bietet zudem die Möglichkeit, weitere Prozessgrößen oder Parameter zu bestimmen oder zu überwachen.

Erfindungsgemäß wird für jede Frequenz des Sendesignals aus dem zugehörigen Antwortsignal der Wert mindestens einer von aktuellen Anwendungsparametern abhängigen Kenngröße des Antwortsignals und/oder mindestens einer aus mindestens einer Kenngröße abgeleiteten Folgegröße ermittelt und gespeichert. In einer möglichen Weiterbildung wird überprüft, bei welcher Frequenz mindestens eine der jeweils ermittelten Kenngrößen und/oder Folgegrößen mindestens ein vorgegebenes Kriterium für das Vorliegen der optimalen Messfrequenz erfüllt. Unter einer Kenngröße ist eine direkt messbare, aus dem Antwortsignal direkt bestimmbare Größe zu verstehen. Die Folgegröße ist hierbei eine Größe, welche aus mindestens einer direkt messbaren Kenngröße berechnet werden kann, beispielsweise auch unter Berücksichtigung weiterer Größen, wie Sondenparameter oder bekannte Mediumseigenschaften. Die Folgegröße kann somit auch die zu bestimmende Prozessgröße, sprich der Füllstand selbst sein. Der in der Elektronikeinheit implementierte Auswertealgorithmus zum Auffinden des optimalen Messpunkts wertet mindestens eine direkt aus dem Antwortsignal erhaltene Kenngröße, und/oder mindestens eine daraus abgeleitete, insbesondere berechnete, Folgegröße aus. Kenngrößen und Folgegrößen nehmen in der Regel Werte an, welche zum einen von der Messfrequenz und zum anderen mehr oder weniger stark von Parametern der aktuellen Anwendung abhängen. Solche Parameter sind beispielsweise die Leitfähigkeit oder die Permittivität des Mediums, die Sondengeometrie, insbesondere die Sondenlänge, die Einbaugeometrie, oder sich an der Sondeneinheit bildender Mediumsansatz. Mittels bestimmter Kriterien wird daher diejenige Frequenz ermittelt, deren zugehöriges Antwortsignal den Füllstand am genausten repräsentiert.

Eine weitere Weiterbildung des Verfahrens sieht vor, dass ein Kriterium das Über- oder Unterschreiten eines Grenzwerts, das Vorliegen eines Extrempunkts, das Annehmen eines bestimmten Werts oder das Vorliegen einer bestimmten Steigung ist. Die Analyse der aufgenommenen Hüllkurven bzw. Datenpaare erfolgt mittels vorgegebener Algorithmen, welche bestimmte Kriterien überprüfen. Die Kriterien sind insbesondere an die Phasenkurve oder die Füllstands- oder Kapazitätskurve anzulegen, welche über alle Frequenzen des Sweeps aufgenommen wurde. Ein Kriterium ist beispielsweise das Vorliegen einer positiven oder negativen Steigung, oder das Vorliegen eines Hoch- oder Tiefpunkts in der Kurve, welche die Kapazität oder den Füllstand über der Frequenz darstellt. Ein weiteres Kriterium ist beispielsweise, ob die Phasenverschiebung zwischen Eingangs- und Ausgangsspannung, d.h. zwischen Sendesignal und Antwortsignal bzw. einer dem Antwortsignal entsprechenden Spannung, einen Sollwert von idealerweise -90° annimmt. Neben den Kriterien für die Kenn- und/oder Folgegrößen können auch bekannte Mediumsparameter, beispielsweise die elektrische Leitfähigkeit, zur Auswertung herangezogen werden.

Gemäß einer vorteilhaften Ausgestaltung des Verfahrens besteht ein Kriterium darin, dass die Frequenz, bei welcher der zugehörige Wert einer der Kenngrößen und/oder Folgegrößen ein bestimmtes Kriterium erfüllt, die höchste Frequenz ist, für welche dieses Kriterium erfüllt ist. Je höher die Messfrequenz ist, desto geringer ist die Ansatzempfindlichkeit. Daher wird die höchstmögliche Frequenz als optimale Messfrequenz verwendet.

In einer Ausgestaltung der Erfindung wird der zeitliche Verlauf mindestens einer der bei einer bestimmten Frequenz ermittelten Kenngrößen und/oder Folgegrößen überwacht. Hierdurch ist beispielsweise Ansatzbildung an der Sondeneinheit detektierbar und kompensierbar. Die Überwachung des zeitlichen Verlaufs kann auch für mehrere Frequenzen durchgeführt werden.

Gemäß einer Weiterbildung des erfindungsgemäßen Verfahrens wird ein Abriss zumindest eines Teils der Sondeneinheit detektiert, indem die Frequenz, ab welcher Resonanzen im Antwortsignal auftreten, überwacht wird. Resonanzen im Antwortsignal sind beispielsweise durch eine positive Steigung in der Kapazitäts- oder Füllstandskurve im oberen Bereich des durchlaufenen Frequenzbands und relativ hohe Werte der Kapazität oder des Füllstands erkennbar.

Eine weitere Weiterbildung besteht darin, dass durch die Elektronikeinheit mittels weiterer Algorithmen an Hand des Frequenzsuchlaufs weitere Information bezüglich mindestens einer der aktuellen Anwendungsparameter, vorzugsweise über die physikalischen Eigenschaften des Mediums, insbesondere die Permittivität und/oder die elektrische Leitfähigkeit des Mediums, und/oder das Vorhandensein oder die Quantität von Mediumsansatz an der Sondeneinheit, bestimmt wird. Zur Bestimmung von Mediumsparametern ist hierbei eine bekannte Sonden- und Einbaugeometrie erforderlich.

Vorteilhaft werden Sensorparameter und/oder Mediumsparameter bei der Durchführung und/oder Auswertung des Frequenzsuchlaufs berücksichtigt, beispielsweise bei der Wahl des Frequenzbandes für den Frequenzsuchlauf und/oder bei der Auswahl des Kriteriums und/oder bei der Auswertung in Bezug auf Ansatz oder einen Mediumsparameter.

Die Erfindung wird anhand der nachfolgenden Figuren näher erläutert. Die Vorrichtung ist dazu ausgestaltet, das Verfahren in all seinen Ausgestaltungen durchzuführen.
- Fig. 1: zeigt ein kapazitives Messgerät mit einer Sondeneinheit;
- Fig. 2: zeigt eine dreidimensionale Darstellung der Abhängigkeit des ermittelten Füllstands von elektrischer Leitfähigkeit und Messfrequenz;
- Fig. 3: zeigt ein Flussdiagramm einer Ausgestaltung des Verfahrens zur Füllstandsmessung.

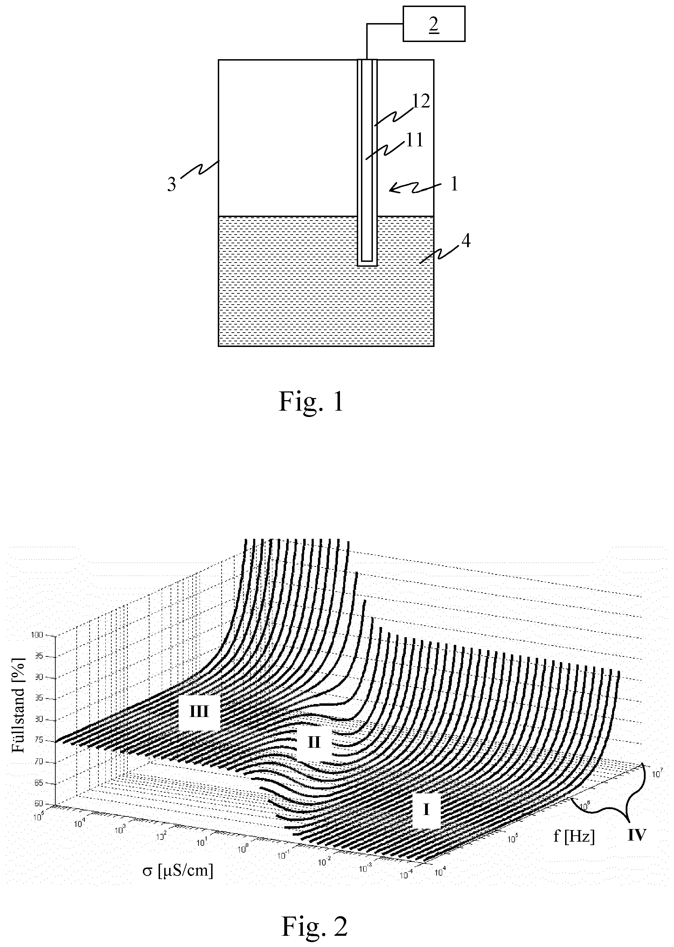

In Fig. 1 ist eine Vorrichtung zur kapazitiven Bestimmung zumindest des Füllstands eines Mediums 4 in einem Behälter 3 dargestellt. Die Vorrichtung weist eine Sondeneinheit 1 auf, welche in den Behälter 3 hineinragt. In dieser Ausgestaltung umfasst die Sondeneinheit 1 eine Sondenelektrode 11 und eine Isolierung 12, welche die Sondenelektrode 11 vollständig umgibt und elektrisch von dem hier flüssigen Medium 4 trennt. Die Gegenelektrode zur kapazitiven Messung bildet die Wandung des Behälters 3. Es kann jedoch gleichermaßen eine zweite Sonde mit einer Referenzelektrode in den Behälter 3 eingebracht sein. Mit einer derartigen Sondeneinheit 1 ist der Füllstand des Mediums 4 kontinuierlich bestimmbar. Die Erfindung kann jedoch auch bei Vorrichtungen zur kapazitiven Erfassung einer Grenzstandes zum Einsatz gelangen, welche auf einer bestimmten Höhe und insbesondere frontbündig in die Wandung des Behälters 3 eingebracht sind. In einer Ausgestaltung weist die Sondeneinheit 1 weiterhin eine Guardelektrode auf, welche die Sondenelektrode 11 zumindest in einem dem Prozessanschluss nahen Bereich koaxial umgibt und ebenfalls von einer Isolierung umgeben ist. Die mit einer erfindungsgemäßen Vorrichtung über den Füllstand hinaus bestimmbaren Größen sind beispielsweise die elektrische Leitfähigkeit und/oder die Permittivität des Mediums 4, oder Ansatzbildung an der Sondeneinheit 1.

Die außerhalb des Behälters 3 angeordnete Elektronikeinheit 2 beaufschlagt die Sondenelektrode 11 mit einem elektrischen Signal in Form einer Wechselspannung und empfängt von der Sondenelektrode 11 ein elektrisches Antwortsignal. Das Antwortsignal ist in der Regel ein Stromsignal, welches über einen Widerstand in ein entsprechendes Spannungssignal umgewandelt wird. Dieses wird vorzugsweise dem Analog/Digital-Wandler eines Mikrocontrollers in der Elektronikeinheit 2 zugeführt. Falls eine Guardelektrode vorhanden ist, erhält diese das gleiche Sendesignal wie die Sondenelektrode 11. Die Kenngrößen des Antwortsignals, wie beispielsweise die Phasenverschiebung zum Sendesignal oder die Amplitude, hängen unter anderem davon ab, welcher Anteil der Sondeneinheit 1 von dem Medium 4 umgeben ist, sodass aus dem Antwortsignal der Füllstand des Mediums 4 kontinuierlich bestimmbar und überwachbar ist. Eine weitere Abhängigkeit ergibt sich von der elektrischen Leitfähigkeit σ und von der Dielektrizitätskonstanten ε bzw. Permittivität des Mediums. Für den Fall, dass das Medium 4 nicht leitfähig ist, ist keine Isolierung erforderlich und es wird die Kapazität zwischen Sondenelektrode 11 und Behälter 3 mit dem Medium 4 als Dielektrikum gemessen. Für den Fall, dass das Medium 4 zumindest eine geringe Leitfähigkeit σ aufweist, wird zudem die Kapazität zwischen Sondenelektrode 11 und Medium 4 gemessen, wobei die Isolierung 12 das Dielektrikum des aus Sondenelektrode 11 und Medium 4 gebildeten Kondensators darstellt. Bei einer hohen Leitfähigkeit σ wird nur noch die Isolationskapazität gemessen, sodass die Messung hier unabhängig von dem Wert der Dielektrizitätskonstanten ε des Mediums ist.

In Fig. 2 ist die Abhängigkeit des ermittelten Füllstands des Mediums 4 von der elektrischen Leitfähigkeit σ des Mediums und von der Messfrequenz f dargestellt. Die Permittivität ist für die dargestellten Kurven jeweils gleich. Es sind vier Bereiche erkennbar:
Bereich I: Die elektrische Leitfähigkeit σ des Mediums 4 ist gering und die Messfrequenz f liegt im unteren bis mittleren Bereich des dargestellten Frequenzbands von 10kHz bis 10MHz. Der berechnete Füllstand ist von der Permittivität des Mediums 4 abhängig, wobei diese Abhängigkeit durch einen Abgleich bei unbedeckter und voll bedeckter Sondeneinheit 1 eliminierbar ist. Der Füllstand ist in diesem Bereich genau bestimmbar.
Bereich II: Übergangsbereich zwischen Permittivitätsabhängiger und Permittivitätsunabhängiger Messung. Die elektrische Leitfähigkeit σ nimmt zu und der Widerstand des Mediums 4 entsprechend ab. Kleine Änderungen in der Leitfähigkeit σ können eine große Änderung im angezeigten Füllstand bewirken, weshalb im Stand der Technik in diesem Bereich keine zuverlässige kapazitive Füllstandsmessung möglich ist.
Bereich III: Die elektrische Leitfähigkeit σ des Mediums 4 ist so groß, dass nur noch die Isolationskapazität gemessen wird. Die Messung ist unabhängig von der Permittivität des Mediums 4 und der Füllstand genau bestimmbar.
Bereich IV: Ab etwa einem Megahertz Messfrequenz beginnt in diesem Beispiel der Resonanzbereich. Dieser tritt bei allen Leitfähigkeitswerten σ auf. Die Grenzfrequenz, welche den Beginn des Resonanzbereichs anzeigt, liegt umso tiefer, je länger die Sondeneinheit 1 ist. Im Resonanzbereich ist keine Füllstandsmessung möglich, da zwischen Messkapazität und Füllstand kein linearer Zusammenhang mehr besteht.

Betrachtet man den Füllstand in Abhängigkeit der Leitfähigkeit σ bei einer bestimmten Frequenz f, z.B. bei 10kHz, ist erkennbar, dass in einem bestimmten Bereich von Leitfähigkeitswerten σ der Füllstand nicht bestimmbar ist. Die Lage dieses Bereichs verschiebt sich in Abhängigkeit der Frequenz f. Während mit einer festen Messfrequenz f somit immer einige Leitfähigkeitswerte σ von der Messung ausgeschlossen sind, kann mit mittels eines Frequenz-Suchlaufs stets mindestens eine Frequenz f aufgefunden werden, bei welcher die Füllstandsbestimmung zuverlässig möglich ist, d.h. welche in den Bereich I oder III fällt. Die Messfrequenz f wird hierzu innerhalb eines bestimmten Frequenzbands, welches vorzugsweise mehrere Größenordnungen umfasst, beispielsweise von 10kHz bis 10MHz, sukzessive erhöht oder erniedrigt. Hierdurch wird eine Vielzahl an Messpunkten aufgenommen, welche zur Auswertung zur Verfügung steht. Hierbei ist nicht nur die Auswertung in Bezug auf den Füllstand an Hand des bei der optimalen Messfrequenz aufgenommenen Antwortsignals möglich, sondern aus dem Verlauf der Kurven der aufgenommenen Kenngrößen mit der Frequenz können weitere Größen bestimmt oder überwacht werden.

Mittels eines Frequenzsweeps ist beispielsweise erkennbar, bei welcher Grenzfrequenz der Resonanzbereich IV beginnt. Für die Füllstandsbestimmung kann hierdurch ein Messwert herangezogen werden, welcher bei einer relativ hohen Frequenz f aufgenommen wurde und somit eine hohe Ansatzverträglichkeit aufweist, und welcher gleichzeitig den Füllstand korrekt repräsentiert, da er mit Sicherheit unterhalb des Resonanzbereichs liegt. Mit dem Frequenzsweep lässt sich stets ein optimaler Messpunkt, d.h. eine Frequenz f und die bei dieser Frequenz f ermittelten Kenngrößen und/oder daraus bestimmten Folgegrößen, finden, bei welchem die Bestimmung des Füllstands mit einem minimalen Messfehler erfolgt.

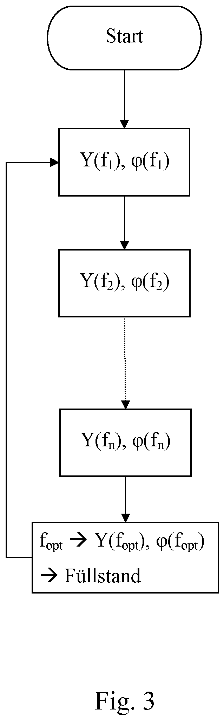

Fig. 3 zeigt ein Flussdiagramm einer einfachen Ausgestaltung des Verfahrens zur Bestimmung und/oder Überwachung des Füllstands eines Mediums. In dieser Ausgestaltung werden als Messwerte bzw. Kenngrößen zumindest die Phasenverschiebung ϕ zwischen Sendesignal und Antwortsignal, sowie die Admittanz Y aufgenommen und zur Auswertung gespeichert. Beide Größen dienen der Berechung der Kapazität und somit der Bestimmung des Füllstands. Aus dem Verlauf der Phasenverschiebung ϕ(fᵢ) und der Admittanz Y(fᵢ) mit sich ändernder Frequenz fᵢ ist die für die Bestimmung des Füllstands optimale Messfrequenz fₒₚₜ ermittelbar.

Bei einer ersten Frequenz f₁ werden aus dem Antwortsignal die Admittanz Y(f₁) und die Phasenverschiebung ϕ(f₁) zwischen Antwortsignal und Sendesignal als Kenngrößen bestimmt. Dann wird die Sondenelektrode 11 mit einem Sendesignal mit einer zweiten Frequenz f₂ beaufschlagt und wiederum die Admittanz Y(f₂) und die Phasenverschiebung ϕ(f₂) bestimmt. Dies wird für alle n Frequenzen aus dem vorgegebenen Frequenzband durchgeführt. Die Kenngrößen Y(fᵢ), ϕ(fᵢ) werden jeweils abgespeichert, sodass am Ende des Frequenzsweeps der Verlauf der Admittanz Y, sowie der Verlauf der Phasenverschiebung ϕ mit der Frequenz f vorliegen.

Mittels eines geeigneten Auswertealgorithmus wird aus den aufgenommenen Kenngrößen Y, ϕ die optimale Messfrequenz fₒₚₜ für die aktuelle Anwendung ermittelt. Zur Auswertung können auch Folgegrößen aus den Kenngrößen, insbesondere unter Einbeziehung von weiteren Parametern, berechnet werden. Vorzugsweise wird aus den Kenngrößen Y, ϕ die Kapazität berechnet und diese alternativ oder zusätzlich zu mindestens einer der Kenngrößen zur Auswertung herangezogen.

Beispielsweise wird überprüft, bei welchen Frequenzen der Wert ϕ der Phasenverschiebung bei idealerweise -90° liegt, da dieses Kriterium unter der Annahme einer rein kapazitiven Anordnung aus Sondeneinheit 1, Medium 4 und Behälter 3, erfüllt sein muss. Vorzugsweise wird weiterhin die Steigung der Kapazitätskurve zumindest für die Punkte, welche das Kriterium für die Phasenverschiebung ϕ erfüllen, ermittelt. An einer großen positiven Steigung bei hohen Frequenzen ist der Beginn des Resonanzbereichs erkennbar. Die optimale Messfrequenz fₒₚₜ liegt knapp unterhalb des Resonanzbereichs, um eine gute Ansatzverträglichkeit zu gewährleisten. In einer vorteilhaften Ausgestaltung wird daher als optimale Messfrequenz fₒₚₜ die höchste Frequenz ermittelt, bei welcher die Kapazität keine oder eine unter einem bestimmten Grenzwert liegende positive Steigung aufweist und der Wert ϕ der Phasenverschiebung -90° beträgt. Die entsprechenden Werte der Admittanz Y, Phasenverschiebung ϕ und/oder Kapazität bilden mit der optimalen Messfrequenz fₒₚₜ den optimalen Messpunkt. Am optimalen Messpunkt wird der Füllstand bestimmt.

Zusätzlich zur Ermittlung des optimalen Messpunkts und der Bestimmung des Füllstands können weitere Auswertungen vorgenommen werden, z.B. in Bezug auf Ansatzbildung oder Sondenabriss. Entsprechende Ausgestaltungen des Verfahrens sind weiter unten beschrieben. Nach der Auswertung des mit einem Frequenz-Suchlauf aufgenommenen Antwortsignals im Hinblick auf alle zu bestimmenden Größen wird in dieser Ausgestaltung mit einem neuen Frequenz-Suchlauf begonnen.

Der Frequenzsweep wird entweder fortlaufend durchgeführt, oder mittels des Frequenzsweeps wird eine geeignete Messfrequenz ermittelt, mit welcher nachfolgend die Füllstandsmessung erfolgt. Im letzteren Fall beaufschlagt die Elektronikeinheit 2 die Sondenelektrode 11 nach einem initialen Frequenz-Suchlauf mit der aufgefundenen optimalen Messfrequenz fₒₚₜ und bestimmt den Füllstand aus dem entsprechenden Antwortsignal. Beispielsweise werden die Phase ϕ und die Admittanz Y gemessen und aus der Phase ϕ und der Admittanz Y die Kapazität und daraus der Füllstand bestimmt. In bestimmten Abständen oder falls eine Änderung eines Anwendungsparameters, z.B. Ansatzbildung, auftritt wird dann ein erneuter Frequenz-Suchlauf durchgeführt und die Messfrequenz gegebenenfalls an die eventuell veränderten Anwendungsbedingungen angepasst. Wird ein Frequenz-Suchlauf durchgeführt, kann der Füllstand auch direkt an Hand des Antwortsignals bei dem Frequenz-Suchlauf ermittelt werden.

In einer Ausgestaltung des Verfahrens wird zusätzlich die Dielektrizitätskonstante des Mediums ermittelt. Die Dielektrizitätskonstante ist für Medien mit Leitfähigkeitswerten bestimmbar, welche im Bereich I, d.h. im Permittivitätsabhängigen Bereich liegen. Hierfür ist ein Abgleich in verschiedenen Medien erforderlich, welcher für eine konkrete Sondengeometrie werkseitig oder bei der Inbetriebnahme des Messgerätes vornehmbar ist. Die im Messbetrieb vorliegende Dielektrizitätskonstante ist dann an Hand eines hinterlegten Zusammenhangs aus dem Antwortsignal auf den Frequenzsweep ermittelbar, beispielsweise aus dem Verlauf der Kapazität.

In einer Ausgestaltung des Verfahrens wird die Leitfähigkeit des Mediums ermittelt. Die Kapazität ist im Bereich II von der Leitfähigkeit abhängig. Die Leitfähigkeit wird beispielsweise aus der Lage des Tiefpunkts vor dem Resonanzbedingten Anstieg der Kapazitäts- oder Füllstandskurve bestimmt, indem die Frequenz, bei welcher der Tiefpunkt auftritt, mit in einem Abgleich hinterlegten Daten verglichen wird.

In einer weiteren Ausgestaltung des Verfahrens wird die Sondeneinheit 1 auf Abriss überwacht. Insbesondere bei Sondeneinheiten 1, welche auf Grund der großen Sondenlänge teilweise als Seil ausgestaltet sind, kann es zu einem Abriss der Sondeneinheit 1 oder zumindest eines Teils davon kommen. Ein derartiger Abriss hat eine Abnahme der Induktivität der Sondeneinheit 1 zur Folge. Die Grenzfrequenz, ab welcher Resonanzen auftreten, verschiebt sich daher bei einem Abriss zu höheren Frequenzen. Die Grenzfrequenz, welche beim Leerabgleich der Sondeneinheit 1 messbar ist, entspricht der für die komplette unbeschädigte Sondeneinheit 1 maximal möglichen Grenzfrequenz. Durch die Überwachung der Grenzfrequenz, beispielsweise durch Aufnahme und Auswertung des zeitlichen Verlaufs der in jedem Durchlauf des Frequenz-Suchlaufs ermittelten Grenzfrequenzen, oder durch einen Vergleich der aktuell vorliegenden Grenzfrequenz mit der beim Leerabgleich der Sondeneinheit 1 gemessenen Grenzfrequenz, ist ein Abriss somit detektierbar.

In einer weiteren Ausgestaltung des Verfahrens wird mittels fortlaufend durchgeführter Frequenzsweeps Ansatzbildung an der Sondeneinheit detektiert und die daraus entstehenden Effekte gegebenenfalls kompensiert. Ein Kriterium für das Auftreten von Ansatz ist beispielsweise das Vorliegen einer negativen Steigung in der mit einem Frequenzsweep aufgenommenen Kapazitätskurve. Ist bekannt, dass die Leitfähigkeit oberhalb des Übergangsbereichs II liegt, können negative Steigungen eindeutig auf Ansatz zurückgeführt werden. Ist diese Information nicht bekannt, ist mindestens ein weiteres Kriterium zur Unterscheidung zwischen einem im Übergangsbereich liegenden Messpunkt und Ansatz erforderlich.

### Bezugszeichenliste

- 1: Sondeneinheit
- 11: Sondenelektrode
- 12: Isolation
- 2: Elektronikeinheit
- 3: Behälter
- 4: Medium

## Patentansprüche

1. Vorrichtung zur kapazitiven Bestimmung und/oder Überwachung mindestens des Füllstands eines Mediums (4) in einem Behälter (3), mit einer Sondeneinheit (1) mit mindestens einer Sondenelektrode (11), und mit einer Elektronikeinheit (2), welche dazu ausgestaltet ist, die Sondenelektrode (11) mit einem elektrischen Sendesignal zu beaufschlagen, und ein elektrisches Antwortsignal von der Sondeneinheit (1) zu empfangen und auszuwerten,
wobei die Elektronikeinheit (2) zur Durchführung eines Frequenz-Suchlaufs und zur Beaufschlagung der Sondenelektrode (11) mit dem Frequenz-Suchlauf ausgebildet ist, wobei der Frequenz-Suchlauf eine Vielzahl an innerhalb eines vorgebbaren Frequenzbands liegenden, aufeinander folgenden, diskreten Erregerfrequenzen aufweist,
**dadurch gekennzeichnet,**
**dass** die Elektronikeinheit (2) derart ausgestaltet ist, dass sie anhand des Frequenz-Suchlaufs aus dem Antwortsignal eine durch aktuelle Anwendungsparameter festgelegte optimale Messfrequenz innerhalb des vorgebbaren Frequenzbandes ermittelt, wobei deren zugehöriges Antwortsignal den Füllstand am genauesten repräsentiert, und wobei es sich bei den aktuellen Anwendungsparametern um Umgebungsparameter, insbesondere den Füllstand, die physikalischen Eigenschaften des Mediums, oder Ansatz an der Sondeneinheit (1), und um die Ausgestaltung der Sondeneinheit (1), und um eine Einbaugeometrie handelt,
**dass** die Elektronikeinheit (2) dazu ausgestaltet ist, für jede Frequenz des Sendesignals aus dem zugehörigen Antwortsignal den Wert mindestens einer von den aktuellen Anwendungsparametern abhängigen und aus dem Antwortsignal direkt bestimmbaren, messbaren, sogenannten Kenngröße des Antwortsignals und/oder mindestens einer aus mindestens einer Kenngröße berechenbaren Folgegröße zu ermitteln und zu speichern, wobei die Elektronikeinheit (2) als Kenngröße die Phasenverschiebung zwischen dem Sendesignal und dem Antwortsignal und die Admittanz bzw. den Betrag des Antwortsignals ermittelt,
und als aus der Kenngröße berechnete Folgegröße insbesondere die Kapazität und/oder den Füllstand des Mediums (4) ermittelt,
**dass** die Elektronikeinheit (2) dazu ausgestaltet ist, die Sondenelektrode (11) stets mit aufeinander folgenden Frequenzsuchläufen zu beaufschlagen, und
**dass** die Elektronikeinheit (2) dazu ausgestaltet ist, aus dem zu der optimalen Messfrequenz gehörigen Antwortsignal den Füllstand zu bestimmen.

2. Verfahren zur kapazitiven Bestimmung und/oder Überwachung mindestens des Füllstands eines Mediums (4) in einem Behälter (3) mit einer Sondeneinheit (1) mit mindestens einer Sondenelektrode (11), die mit einem elektrischen Sendesignal von einer Elektronikeinheit (2) beaufschlagt wird, wobei von der Elektronikeinheit (2) ein elektrisches Antwortsignal von der Sondeneinheit (1) empfangen und ausgewertet wird, wobei die Sondenelektrode (11) mittels eines Frequenz-Suchlaufs mit einem elektrischen Sendesignal beaufschlagt wird, welches eine Vielzahl an innerhalb eines vorbestimmbaren Frequenzbandes liegenden, aufeinander folgenden, diskreten Erregerfrequenzen aufweist,
**dadurch gekennzeichnet,**
**dass** anhand des Frequenz-Suchlaufs aus dem Antwortsignal eine durch aktuelle Anwendungsparameter festgelegte optimale Messfrequenz innerhalb des vorgebbaren Frequenzbandes ermittelt wird, wobei deren zugehöriges Antwortsignal den Füllstand am genauesten repräsentiert, und
wobei es sich bei den aktuellen Anwendungsparametern um Umgebungsparameter, insbesondere den Füllstand, die physikalischen Eigenschaften des Mediums (4), oder Ansatz an der Sondeneinheit (1), und um die Ausgestaltung der Sondeneinheit (1) und um eine Einbaugeometrie handelt,
**dass** für jede Frequenz des Sendesignals aus dem zugehörigen Antwortsignal der Wert mindestens einer von den aktuellen Anwendungsparametern abhängigen und aus dem Antwortsignal direkt bestimmbaren, messbaren, sogenannten Kenngröße des Antwortsignals und/oder mindestens einer aus mindestens einer Kenngröße berechenbaren Folgegröße ermittelt und gespeichert wird,
wobei als Kenngröße die Phasenverschiebung zwischen dem Sendesignal und dem Antwortsignal und die Admittanz bzw. der Betrag des Antwortsignals ermittelt werden/wird,
und wobei als aus der Kenngröße berechnete Folgegröße insbesondere die Kapazität und/oder der Füllstand des Mediums (4) ermittelt werden/wird,
**dass** die Sondenelektrode (11) stets mit aufeinander folgenden Frequenzsuchläufen beaufschlagt wird,
und **dass** aus einem zu der optimalen Messfrequenz gehörigen Antwortsignal der Sondenelektrode (11) der Füllstand bestimmt wird.

3. Verfahren nach Anspruch 2,
**dadurch gekennzeichnet,**
**dass** anhand eines Algorithmus überprüft wird, bei welcher Frequenz mindestens eine der jeweils ermittelten Kenngrößen und/oder Folgegrößen mindestens ein vorgegebenes Kriterium für das Vorliegen der optimalen Messfrequenz erfüllt.

4. Verfahren nach Anspruch 3,
**dadurch gekennzeichnet,**
**dass** ein Kriterium das Über- oder Unterschreiten eines Grenzwerts, das Vorliegen eines Extrempunkts, das Annehmen eines bestimmten Werts oder das Vorliegen einer bestimmten Steigung ist.

5. Verfahren nach einem der Ansprüche 3 bis 4,
**dadurch gekennzeichnet,**
**dass** ein Kriterium darin besteht, dass die Frequenz, bei welcher der zugehörige Wert einer der Kenngrößen und/oder Folgegrößen ein bestimmtes Kriterium erfüllt, die höchste Frequenz ist, für welche dieses Kriterium erfüllt ist.

6. Verfahren nach einem der Ansprüche 3 bis 5,
**dadurch gekennzeichnet,**
**dass** der zeitliche Verlauf mindestens einer der bei einer bestimmten Frequenz ermittelten Kenngrößen und/oder Folgegrößen überwacht wird.

7. Verfahren nach einem der Ansprüche 3 bis 6,
**dadurch gekennzeichnet,**
**dass** ein Abriss zumindest eines Teils der Sondeneinheit (1) detektiert wird, indem die Frequenz, ab welcher Resonanzen im Antwortsignal auftreten, überwacht wird.

8. Verfahren nach einem der Ansprüche 2 bis 7,
**dadurch gekennzeichnet,**
**dass** durch die Elektronikeinheit mittels weiterer Algorithmen anhand des Frequenzsuchlaufs weitere Information bezüglich mindestens eines der aktuellen Anwendungsparameter, vorzugsweise über die physikalischen Eigenschaften des Mediums, insbesondere die Permittivität und/oder die elektrische Leitfähigkeit des Mediums (4), und/oder das Vorhandensein oder die Quantität von Mediumsansatz an der Sondeneinheit (1), bestimmt wird.

## Claims

1. Apparatus for the capacitive determination and/or monitoring of at least the level of a medium (4) in a vessel (3), wherein said apparatus comprises a probe unit (1) with at least a probe electrode (11), and an electronics unit (2), which is designed to apply an electrical transmission signal to the probe electrode (11), and to receive and evaluate an electrical response signal from the probe unit (1),
wherein the electronics unit (2) is designed to perform a frequency search and to apply the frequency search to the probe electrode (11), wherein the frequency search features a large variety of consecutive discrete exciter frequencies located within a predefinable frequency range,
**characterized in that**
the electronics unit (2) is designed to determine - on the basis of the response signal and using the frequency search - an optimum measuring frequency which is within the predefinable frequency range and defined by current application parameters, wherein the associated response signal most accurately represents the level, and wherein the current application parameters are environmental parameters, particularly the level, the physical properties of the medium, or deposit buildup on the probe unit (1), and the design of the probe unit (1), as well as the installation geometry,
**in that**, for each frequency of the transmission signal, the electronics unit (2) is designed to determine and store - on the basis of the associated response signal - the value of at least a measurable characteristic variable of the response signal which depends on the current application parameters and can be determined directly from the response signal and/or at least a dependent variable which can be calculated from at least a characteristic variable, wherein the electronics unit (2) determines the phase shift between the transmission signal and the response signal and the admittance or the value of the response signal as the characteristic variable,
and particularly determines the capacity and/or the level of the medium (4) as the dependent variable calculated from the characteristic variable,
**in that** the electronics unit (2) is designed to constantly apply frequency searches to the probe electrode (11), and
**in that** the electronics unit (2) is designed to determine the level from the response signal associated with the optimum measuring frequency.

2. Procedure for the capacitive determination and/or monitoring of at least the level of a medium (4) in a vessel (3) with a probe unit (1) with at least a probe electrode (11) to which an electrical transmission signal is applied by the electronics unit (2), wherein the electronics unit (2) receives and evaluates an electrical response signal coming from the probe unit (1), wherein an electrical transmission signal is applied to the probe electrode (11) by means of a frequency search, wherein said signal features a variety of consecutive, discrete exciter frequencies located within a predefinable frequency range,
**characterized in that**
the frequency search is used to determine - on the basis of the response signal - an optimum measuring frequency within the predefinable frequency range, which is defined by current application parameters and wherein the associated response signal most accurately represents the level, and
wherein the current application parameters are environmental parameters, particularly the level, the physical properties of the medium (4), or deposit buildup on the probe unit (1), and the design of the probe unit (1) as well as an installation geometry,
**in that**, for each frequency of the transmission signal, the value of at least a measurable characteristic variable of the response signal, which depends on the current application parameters and can be determined directly from the response signal, and/or at least a dependent variable, which can be calculated from at least a characteristic variable, is determined and stored on the basis of the associated response signal,
and wherein, in particular, the capacity and/or the level of the medium (4) is/are determined as the dependent variable calculated from the characteristic variable,
**in that** consecutive frequency searches are constantly applied to the probe electrode (11), and
**in that** the level is determined from a response signal of the probe electrode (11) that is associated with the optimum measuring frequency.

3. Procedure as claimed in Claim 2,
**characterized in that**
an algorithm is used to check the frequency at which at least one of the characteristic variables and/or the dependent variables determined meets at least a predefined criterion for the presence of the optimum measuring frequency.

4. Procedure as claimed in Claim 3,
**characterized in that**
a criterion is the overshooting or undershooting of a limit value, the presence of an extreme point, the adoption of a determined value or the presence of a certain slope.

5. Procedure as claimed in one of the Claims 3 to 4,
**characterized in that**
a criterion is that the frequency at which the associated value of one of the characteristic variables and/or the dependent variables meets a certain criterion is the highest frequency for which this criterion is met.

6. Procedure as claimed in one of the Claims 3 to 5,
**characterized in that**
the development, over time, of at least one of the characteristic variables and/or dependent variables determined at a certain frequency is monitored.

7. Procedure as claimed in one of the Claims 3 to 6,
**characterized in that**
a rupture of at least a section of the probe unit (1) is detected by monitoring the frequency as of which resonances occur in the response signal.

8. Procedure as claimed in one of the Claims 2 to 7,
**characterized in that**
additional information concerning at least one of the current application parameters, preferably concerning the physical properties of the medium, particularly the permittivity and/or the electrical conductivity of the medium (4), and/or the presence or amount of medium buildup on the probe unit (1), is determined by the electronics unit by means of additional algorithms on the basis of the frequency search.

## Revendications

1. Dispositif destiné à la détermination capacitive et/ou à la surveillance au moins du niveau d'un produit (4) dans un réservoir (3), lequel dispositif comprend une unité de sonde (1) avec au moins une électrode de sonde (11), et une unité électronique (2), laquelle est conçue pour appliquer un signal d'émission électrique à l'électrode de sonde (11), et pour recevoir et exploiter un signal de réponse électrique provenant de l'unité de sonde (1), l'unité électronique (2) étant conçue pour effectuer une recherche de fréquences et pour appliquer la recherche de fréquences à l'électrode de sonde (11), la recherche de fréquences présentant une multiplicité de fréquences d'excitation discrètes successives situées à l'intérieur d'une bande de fréquence prédéfinissable,
**caractérisé**
**en ce que** l'unité électronique (2) est conçue de telle sorte qu'elle détermine, à partir du signal de réponse et à l'aide de la recherche de fréquences, une fréquence de mesure optimale à l'intérieur de la bande de fréquence prédéfinissable et définie par des paramètres d'application actuels, dont le signal de réponse associé représente le plus exactement le niveau, et les paramètres d'application actuels étant des paramètres environnants, notamment le niveau, les propriétés physiques du produit, ou les dépôts sur l'unité de sonde (1), et la conception de l'unité de sonde (1), ainsi qu'une géométrie de montage,
**en ce que** l'unité électronique (2) est conçue pour déterminer et mémoriser, pour chaque fréquence du signal d'émission, à partir du signal de réponse associé, la valeur d'au moins une grandeur mesurable, dite caractéristique, du signal de réponse, qui dépend des paramètres d'application actuels et peut être déterminée directement à partir du signal de réponse et/ou au moins une grandeur dépendante qui peut être calculée à partir d'au moins une grandeur caractéristique, l'unité électronique (2) déterminant en tant que grandeur caractéristique le déphasage entre le signal d'émission et le signal de réponse et l'admittance ou l'amplitude du signal de réponse,
et détermine notamment la capacité et/ou le niveau du produit (4) en tant que grandeur dépendante calculée à partir de la grandeur caractéristique
**en ce que** l'unité électronique (2) est conçue pour appliquer constamment des recherches de fréquences successives à l'électrode de sonde (11), et
**en ce que** l'unité électronique (2) est conçue pour déterminer le niveau à partir du signal de réponse associé à la fréquence de mesure optimale.

2. Procédé destiné à la détermination capacitive et/ou à la surveillance au moins du niveau d'un produit (4) dans un réservoir (3), lequel procédé comprend une unité de sonde (1) avec au moins une électrode de sonde (11), à laquelle est appliquée un signal d'émission électrique par l'unité électronique (2), un signal de réponse électrique provenant de l'unité de sonde (1) étant reçu et exploité par l'unité électronique (2), un signal d'émission électrique étant appliqué à l'électrode de sonde (11) au moyen d'une recherche de fréquences, lequel signal présente une multiplicité de fréquences d'excitation discrètes successives situées à l'intérieur d'une bande de fréquence prédéfinissable,
**caractérisé**
**en ce que** la recherche de fréquences est utilisée pour déterminer à partir du signal de réponse une fréquence de mesure optimale à l'intérieur de la bande de fréquence prédéfinissable, qui est déterminée par les paramètres d'application actuels et dont le signal de réponse associé représente le plus exactement le niveau, et
les paramètres d'application actuels étant des paramètres environnants, notamment le niveau, les propriétés physiques du produit (4), ou les dépôts sur l'unité de sonde (1), et la conception de l'unité de sonde (1) ainsi qu'une géométrie de montage,
**en ce que**, pour chaque fréquence du signal d'émission, la valeur d'au moins une grandeur mesurable, dite caractéristique, du signal de réponse, qui dépend des paramètres d'application actuels et peut être déterminée directement à partir du signal de réponse et/ou au moins une grandeur dépendante qui peut être calculée à partir d'au moins une grandeur caractéristique, est déterminée et mémorisée à partir du signal de réponse associé,
le déphasage entre le signal d'émission et le signal de réponse et l'admittance ou l'amplitude du signal de réponse étant déterminés en tant que grandeur caractéristique, et notamment la capacité et/ou le niveau du produit (4) étant déterminés en tant que grandeur dépendante calculée à partir de la grandeur caractéristique,
**en ce que** l'électrode de sonde (11) est constamment soumise à des recherches successives de fréquences,
et **en ce que** le niveau est déterminé à partir d'un signal de réponse de l'électrode de sonde (11) appartenant à la fréquence de mesure optimale.

3. Procédé selon la revendication 2,
**caractérisé**
**en ce que** l'on vérifie, à l'aide d'un algorithme, à quelle fréquence au moins une des grandeurs caractéristiques et/ou des grandeurs dépendantes respectivement déterminées remplit au moins un critère prédéfini pour la présence de la fréquence de mesure optimale.

4. Procédé selon la revendication 3,
**caractérisé**
**en ce qu'**un qu'un critère est le dépassement par excès ou par défaut d'une valeur limite, la présence d'un point extrême, l'adoption d'une valeur déterminée ou la présence d'une pente déterminée.

5. Procédé selon l'une des revendications 3 à 4,
**caractérisé**
**en ce qu'**un critère consiste en ce que la fréquence, à laquelle la valeur associée de l'une des grandeurs caractéristiques et/ou des grandeurs dépendantes satisfait à un critère déterminé, est la fréquence la plus élevée pour laquelle ce critère est satisfait.

6. Procédé selon l'une des revendications 3 à 5,
**caractérisé**
**en ce qu'**est surveillée l'évolution dans le temps d'au moins une des grandeurs caractéristiques et/ou des grandeurs dépendantes déterminées à une fréquence donnée.

7. Procédé selon l'une des revendications 3 à 6,
**caractérisé**
**en ce qu'**une rupture d'au moins une partie de l'unité de sonde (1) est détectée en surveillant la fréquence au-dessus de laquelle des résonances apparaissent dans le signal de réponse.

8. Procédé selon l'une des revendications 2 à 7,
**caractérisé**
**en ce que** d'autres informations concernant au moins l'un des paramètres d'application actuels, de préférence concernant les propriétés physiques du produit, notamment la permittivité et/ou la conductivité électrique du produit (4), et/ou la présence ou la quantité de dépôts de produit sur l'unité de sonde (1), sont déterminées par l'unité électronique au moyen d'autres algorithmes sur la base de la recherche de fréquences.
